# EUROPÄISCHE PATENTSCHRIFT

(11) **EP 2 433 159 B1**
(45) Veröffentlichungstag und Bekanntmachung des Hinweises auf die Patenterteilung: **17.04.2013**
(21) Anmeldenummer: 10726895.5
(22) Anmeldetag: 18.05.2010
(51) Int. Cl.: G01V 3/10, G01V 3/15

(54) **METALLDETEKTOR**
METAL DETECTOR
DÉTECTEUR DE MÉTAUX

(30) Priorität: 18.05.2009 DE 102009021804; 19.06.2009 DE 102009029928
(43) Veröffentlichungstag der Anmeldung: 28.03.2012
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2010/003005
(87) Internationale Veröffentlichungsnummer: WO 2010/133328

(56) Entgegenhaltungen:
- WO-A1-02/091021
- DE-A1- 3 225 166
- DE-A1-102004 047 188
- GB-A- 2 262 606

## Beschreibung

Die Erfindung betrifft einen Sensor zur Ortung metallischer Objekte, insbesondere einen im PI-Modus betriebenen Metalldetektor, mit den Merkmalen des Oberbegriffs des Anspruches 1 sowie ein zugehöriges Verfahren mit den Merkmalen des Oberbegriffs des Anspruches 9.

Ein im Pulsinduktionsverfahren(PI-)Modus betriebener Metalldetektor ist aus der DE 32 25 166 A1 bekannt, der mehrere Sendespulen und eine Empfangsspule besitzt, wobei in den Sendespulen ein Strom gleicher Richtung fließt. Die Sendespulen sind so angelegt, dass sie sich bei ungestörtem Feld in der Sendespule kompensieren. Die Stromstärke beider Sendespulen können individuell geregelt werden. Die Spulen sind konzentrisch angeordnet.

Ein im Pulsinduktionsverfahren(PI-)Modus betriebener Metalldetektor, der dem Oberbegriff des Anspruches 1 zugrunde liegt, ist aus der DE 103 01 951 A9 bekannt. Die Wechselwirkung der primären und sekundären Spulen wird durch teilweise Überlappung der coplanaren Spulensysteme entkoppelt. Eine Einstellung der Entkopplung erfolgt mittels mechanisch verschiebbarer Massen im Bereich der Überlappung oder durch elektrische Kompensationshilfsmittel z.B. in der Form zusätzlicher Kompensationssignale vom Generator in den Empfangskreis. Sie kompensieren den nicht vollständig entkoppelten Anteil der Sendeenergie in die Empfangsspule. Eine "Rückkoppelung" zwischen detektiertem Signal der Empfangsspule und Kompensationswirkung, also eine geschlossene Regelung liegt nicht vor.

Aus der DE 103 18 350 B3 ist eine vergleichbare Anordnung bekannt, bei der mehrere Spulen hinsichtlich ihres magnetischen Wechselfelds überlappend, benachbart versetzt zueinander geschachtelt sind. Eine größte Spule vorzugsweise die Empfangsspule bestimmt die Peripherie der Spulenanordnung.

Aus der DE 36 19 308 C1 ist eine Umkehrung des oben genannten Prinzips bekannt, d.h., eine umliegende Sendespule mit zwei als "Acht" ausgebildeten Empfangsspulen, in denen gegenseitig das ausgesandte Feld ausgelöscht wird.

Aus der DE 43 39 419 C2 ist ein Metalldetektor mit einer Sendespule und einer Empfangsspule bekannt, die sich teilweise so überlagern, dass der Wechselinduktionskoeffizient minimal ist. Die Spulen werden wechselweise als Sende- und Empfangsspule betrieben.

Um ein kapazitives Übersprechen von der Sendespule in die Empfangsspule zu verringern, wenn Sende- und Empfangsspule sehr nah beieinander liegen, so wie es bei Printspulen der Fall ist, wird in der DE 10 2004 047 189 A1 eine Abschirmmaßnahme in Form einer Abschirmelektrode zwischen Sende- und Empfangsspule vorgeschlagen. Zur Feinjustierung sind ferner Hilfswicklungen vorgesehen.

Aus der EP 706 648 B1 ist eine Amplitudenregelung an sich bekannt, bei der Lichtsignale unter Kompensation äußerer Einflüsse wie Fremdlicht-, Temperatur- oder Alterungseinflüsse zwischen Lichtsender und Lichtempfänger erfasst werden. Die Lichtsender werden über einen Taktgenerator zeitabschnittsweise und wechselweise betrieben. Das in der Amplitude wenigstens einer Lichtstrecke geregelte Licht wirkt gegebenenfalls mit dem Licht eines weiteren Lichtsenders wie zum Beispiel einer Kompensationslichtquelle so auf den Lichtempfänger ein, dass ein Empfangssignal ohne taktsynchrone Signalanteile entsteht. Das Empfangssignal des Lichtempfängers wird einem Synchrondemodulator zugeführt, der das Empfangssignal wiederum in die den beiden Lichtquellen entsprechenden Signalkomponenten zerlegt. Diese werden in einem Komparator miteinander verglichen, wobei ein einem Nullzustand entsprechender Zustand des Regelwerts entsteht. Liegt am Ausgang des Vergleichers kein diesem Nullzustand entsprechendes Signal an, wird dieser Regelwert verwendet, um die Strahlungsleistung, die den Lichtquellen zugeführt wird, dahingehend zu regeln, bis dieser Zustand erreicht ist.

Ausgehend von diesem Stand der Technik liegt der vorliegenden Erfindung die Aufgabe zugrunde, ein einfachen und effektiven Sensor und ein zugehöriges Verfahren zur Verfügung zu stellen.

Diese Aufgabe wird durch einen Sensor mit den Merkmalen des Anspruches 1 sowie durch ein Verfahren mit den Merkmalen des Anspruches 9 gelöst.

Der Sensor weist mindestens eine Empfangsspule und mehrere Sendespulen bzw. Sendespulenteile auf, die eine Sendespule in einer bestimmten Weise vorzugsweise als gespiegelte Hälften aufteilen. Durch die Wechselwirkung von mehreren Sendespulen und wenigstens einer Empfangsspule, wobei die Sendespulen teilweise überlappend zur Empfangsspule angeordnet sind, ergibt sich ein örtlicher Punkt optimaler Auslöschung der von den Sendespulen ausgesandten Felder in den Empfangsspulen. Die Spulen sind dabei so angeordnet, dass die Sendespulenteile bei gleicher Bestromung eine Wirkung auf die wenigstens eine Empfangsspule ausüben, bei der ein örtlicher Punkt der optimalen Auslöschung der ausgesandten Felder in den Empfangsspulen entsteht. Dieser Punkt verschiebt bzw. bewegt sich jedoch bei hauptsächlicher bis alleiniger Bestromung einer ersten Sendespule oder eines ersten Teils der Sendespule in eine erste Richtung, während er sich bei hauptsächlicher bis alleiniger Bestromung einer weiteren Sendespule oder eines weiteren Teils der Sendespule in eine weitere, vorzugsweise der ersten Richtung entgegengesetzten Richtung verschiebt bzw. bewegt. Dieser örtliche Punkt der optimalen Auslöschung wird durch eine Metallannäherung beeinflusst. Eine Regelschaltung zur Regelung der Ströme der Sendespulenteile führt im Regelungsfall zu einer Verschiebung des örtlichen Punktes der optimalen Auslöschung, die eine Auslöschung des Empfangssignals bewirkt. Der dafür erforderliche Regelwert bzw. seine Änderung wird vorzugsweise als Maß für eine Metallannäherung verwendet.

Mit dieser Lösung ergibt sich eine einfache Nachführung der Entkopplung zwischen Sende- und Empfangssystem auch unter ständig wechselnden Umweltbedingungen, wie z.B. bei Metallannäherung oder mechanischen Veränderungen des Spulenkörpers oder Anwesenheit oder Veränderungen von Bodeneffekten.

Werden mehrere Empfangsspulen und mehrere Sendespulen vorgesehen, kann jeweils wenigstens eine Sendespule und wenigstens eine Empfangsspule auf verschiedenen Ebenen angeordnet werden. Die Spulen auf einer Ebene werden zu den Spulen auf wenigstens einer weiteren Ebene verdreht, bis sich die Wechselwirkung der Spulen bei einem bestimmten Zentriwinkel auslöscht, der von der jeweiligen Einsatzart abhängig ist. Um einen Regeleingriff zu ermöglichen, bei dem der Regelwert zugleich der Messwert ist, werden die Spulen zumindest geringfügig vorzugsweise zum Beispiel um einen Abstand von 0,1 bis zwei Prozent des Spulendurchmessers parallel zueinander verschoben oder entsprechend zueinander gedreht. Damit liegen die Sende- und Empfangsspulen von ihrem Umfang her nahezu kongruent übereinander, so dass sich ein äußerst kompakter Aufbau ergibt. In der Praxis führt eine derartige Anordnung der Spulen, die vorzugsweise auf gegenüberliegenden Seiten einer Platine als Printspulen ausgebildet werden können, mit der beschriebenen Elektronik zu einer hohen Detektionsempfindlichkeit. Bei einem Gesamtdurchmesser der Spulenanordnung von 25mm konnte in der Praxis eine Nachweisgrenze von über 500mm erreicht werden.

Das durch die von den Sendespulen ausgesandten Felder in den Empfangsspulen induzierte Signal wird einem Verstärker zugeführt. Bei Verwendung von z.B. zwei Empfangsspulen können die Empfangsspulen parallel oder auch in Reihe geschaltet sein. Wesentlich ist dabei, dass sich das in den Empfangsspulen induzierte Signal auslöschen lässt. Vorzugsweise kann auch ein Verstärker mit symmetrischem Eingang gewählt werden. Ein dem Verstärker nachgeschalteter Synchrondemodulator mit nachgeschaltetem Komparator kann zum Vergleich der den Sendespulen zugeordneten Spannungssignale zur Ermittlung eines Regelwertes vorgesehen werden. Der Ausgang des Komparators liefert den Regelwert. In wenigstens einer geregelten Stromquelle wird mittels des Regelwerts die Amplitude des den Sendespulen zugeführten Stroms vorzugsweise kontinuierlich so regelt, dass die Amplituden der Spannungssignale an den Eingängen des Komparators im Wesentlichen gleich groß sind. Dem entspricht dann eine Auslöschung des empfangenen Signals in der oder den Empfangsspulen. Die Auslöschung entspricht wiederum einer vollständigen Entkopplung zwischen Sendespule und Empfangsspulen.

Durch die Synchrondemodulation der Signale der Empfangsspulen und das Vergleichen der den Taktphasen zuordenbaren Ausgangssignale mittels eines Komparators wird eine Information (Regelwert) gewonnen, die zur Steuerung der Ströme mindestens einer der Sendespulen verwendbar ist. Dies entspricht dann einem geschlossenen Regelkreis. Bei mechanisch korrekter Anordnung der Sendespulen zu der oder den Empfangsspulen werden den Sendespulen durch die Regelung gleich große Ströme zugeteilt, d.h., in diesem Fall ist das Empfangssignal in beiden oder der einen Empfangsspule ausgelöscht. Der Regelwert wird sich dann z.B. in einem mittleren Regelbereich befinden. Bei Annährung z.B. von Metall ändert sich dieser Regelwert entsprechend, während das Empfangssignal in der oder den Empfangsspulen ausgelöscht bleibt. Eine aufgrund von möglichen Fertigungstoleranzen nicht ganz korrekte Stellung der Sendespulen und Empfangsspulen zueinander führt dagegen lediglich zu einem konstanten Offset des Regelwerts von seinem Idealzustand.

Grundsätzlich können gerade bei Printspulen auf der Leiterplatte auch mehr als nur zwei Ebenen von Spulen angeordnet werden.

Weitere Vorteile ergeben sich aus den Unteransprüchen und der nachfolgenden Beschreibung.

### Kurzbeschreibung der Figuren.

Im Folgenden wird die Erfindung anhand von in den beigefügten Figuren dargestellten Ausführungsbeispielen näher erläutert. Es zeigen:
- Fig. 1: ein Sensorsystem nach dem PI Verfahren nach dem Stand der Technik sowie den zugehörigen Amplitudenverlauf an der Empfangsspule,
- Fig. 2: eine Anordnung von zwei gespiegelten Spulenhälften in einem ersten Ausführungsbeispiel,
- Fig. 3: eine mechanische Anordnung der Spulenhälften gemäß Fig. 2 zusammen mit einer Empfangsspule,
- Fig. 4: eine Sensorelektronik mit einer geschlossenen Regelung zur Stabilisierung des örtlichen Punktes der optimalen Auslöschung in der Empfangsspule,
- Fig. 5, 6: Verschiebungen des örtlichen Punkts der optimalen Auslöschung bei unterschiedlicher Bestromung der Sendespulenanordnung,
- Fig. 7: ein Diagramm des Regelwerts der Sensorelektronik über der Zeit,
- Fig. 8: die Anordnung einer ersten Sendespulenhälfte und einer ersten Empfangsspulenhälfte in einem weiteren Ausführungsbeispiel,
- Fig. 9: die Anordnung der Spulen gemäß Fig. 8 mit den Anschlusselementen an die Elektronik,
- Fig. 10: die Spulenanordnung gemäß Fig. 8 als Printlösung im Schnitt,
- Fig. 11: eine Sensorelektronik gemäß Fig. 10 mit einer geschlossenen Regelung der Stabilisierung des örtlichen Punktes der optimalen Auslöschung in den Empfangsspulen.

### Ausführliche Beschreibung bevorzugter Ausführungsbeispiele

Die Erfindung wird jetzt beispielhaft unter bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Der in dieser Anmeldung verwendete Begriff "örtlicher Punkt der Auslöschung" bezeichnet den bei einer Überlagerung von wenigstens zwei ein Feld aussendenden Spulen fester geometrischer Anordnung entstehenden Punkt auf einer zwischen den Mitten der beiden Sendespulen gedachten Linie, an dem sich bei Stromfluss durch die beiden Spulen das dabei hervorgerufene Magnetfeld in der oder den Empfangsspulen auslöscht.

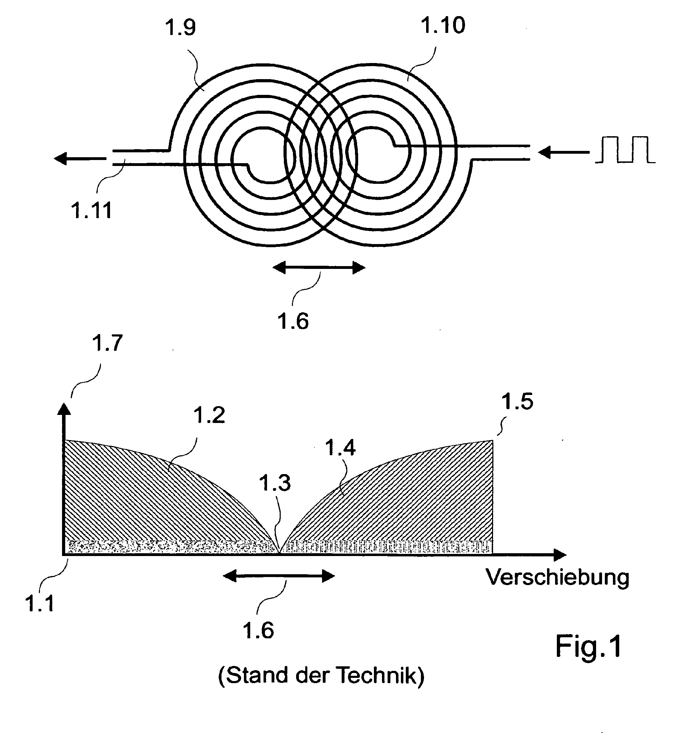

Fig. 1 zeigt den Amplitudenverlauf in einem Sensorsystem nach dem PI Verfahren im Stand der Technik an der Empfangsspule 1.9 bei Verschiebung der Sendespule 1.10 bzw. Empfangsspule zueinander. Die Amplitude 1.7. der Empfangsspule ist über der Verschiebung in Fig. 1 unten aufgetragen. Die Verschiebung startet bei 1.1 und endet bei 1.5, wobei der dabei im Diagramm zurückgelegte Weg der Verschiebung z.B. +/- 5 mm vom Punkt 1.3 der optimalen Auslöschung beträgt.

Wird z.B. die Empfangsspule im Verhältnis zur Sendespule in Richtung des Doppelpfeils 1.6 nach rechts verschoben, nimmt zunächst das empfangene Signal 1.2 ab. Das Signal hat eine taktsynchrone Phasenlage zu dem der Sendespule zugeführten Signal im Ausführungsbeispiel von 0°. Bei Erreichen des örtlichen Punktes der optimalen Auslöschung, also des Entkopplungspunktes 1.3 ist das empfangene Signal Null, während das empfangene Signal 1.4 bei weiterer Verschiebung mit um 180° gedrehter Phase wieder ansteigt. Der örtliche Punkt der optimalen Auslöschung ist nur im Laborbetrieb relativ stabil. Fertigungstolleranzen, Temperatureinflüsse, mechanische Deformation der Spulenanordnung oder das Vorhandensein von z.B. Bodeneinflüssen z.B. bei der Metallsuche in metallhaltigen Böden verschieben diesen Punkt. Weiterhin wird der örtliche Punkt auch durch einen in die Nähe gebrachten metallischen Gegenstand verschoben. Die Möglichkeit der geometrischen Position eines Punktes der optimalen Auslöschung ist bei allen oben genannten Einflüssen z. B. in einem Bereich entlang des Doppelpfeils 1.6 zu lokalisieren.

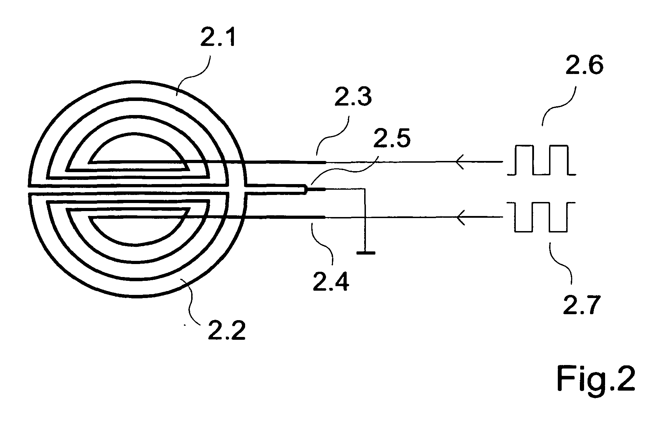

Trotz aller oben genannter Einflüsse soll der Punkt der optimalen Auslöschung mit einfachen Mitteln und einer geschlossenen Regelung immer an exakt der gleichen örtlichen Stelle bleiben. Dies wird durch folgende Maßnahme erreicht:
Die Sendespule 1.10 nach dem Stand der Technik wird geteilt und vorzugsweise so halbiert, dass sich zwei im wesentlichen identische und spiegelbildliche Spulenhälften bilden. Eine andere Aufteilung ist jedoch möglich, wenn damit bei entsprechender Bestromung eine kontinuierliche bzw. stetige und damit nicht ruckartige Verschiebung des örtlichen Punkts der Auslöschung erreichbar ist. Fig.2 zeigt die Anordnung dieser Spulenteile bzw. Spulenhälften 2.1 und 2.2 als Sendespulen mit den Anschlüssen 2.3 für die erste obere Spulenhälfte 2.1 und 2.4 für die zweite untere Spulenhälfte 2.2. Die zwei verbliebenen Anschlüsse der Spulenhälften sind im Ausführungsbeispiel zu 2.5 zusammengefasst. Komplementäre, sich zu einer Spannung ergänzende Spannungen 2.6 und 2.7 an den Anschlüssen 2.3 und 2.4 rufen in beiden Spulenhälften ein Magnetfeld gleicher Polarität hervor. In diesem Fall verhalten sich die beiden Spulenhälften im Wesentlichen wie eine einzige Spule im Stand der Technik.
Die Spulenhälften oder besser Spulenteile werden im Folgenden als Sendespulen 2.1, 2.2 bezeichnet

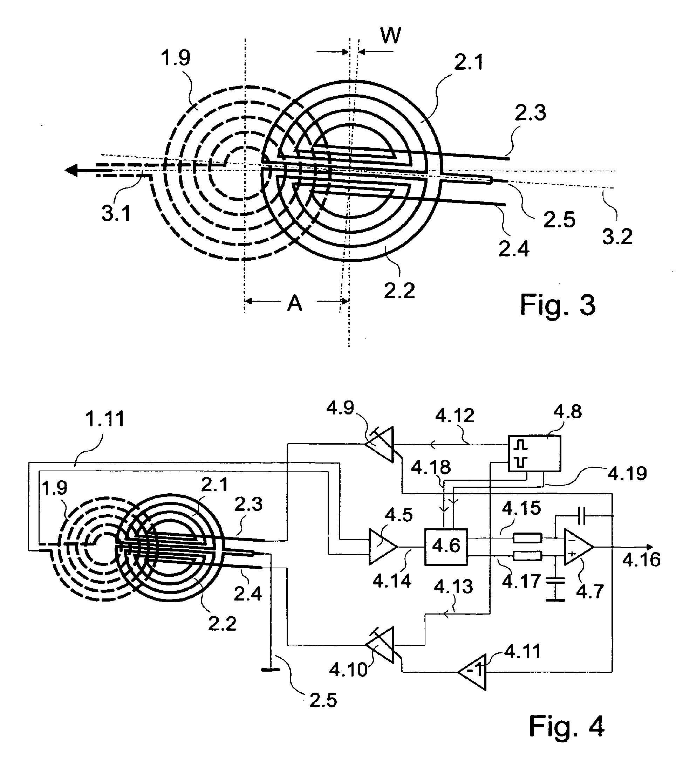

Fig. 3 zeigt eine mechanische Anordnung der ersten oberen Sendespule 2.1 und der zweiten unteren Sendespule 2.2 zusammen mit der Empfangsspule 1.9. Zur besseren Unterscheidbarkeit ist die Empfangsspule 1.9 gestrichelt gezeichnet. Der Durchmesser der in diesem Ausführungsbeispiel kreisförmigen Empfangsspule 1.9 entspricht etwa dem Durchmesser der halbkreisförmigen Sendespulenteile.

Die horizontale Achse 3.2 der Sendespulenanordnung, welche die beiden Sendespulen 2.1 und 2.2 umfasst, ist gegenüber der horizontalen Achse 3.1 der Empfangsspule 1.9 um den Winkel W gekippt. Daher überdeckt die Sendespule 2.2 die Empfangsspule 1.9 um einen bestimmten Betrag mehr als die Sendespule 2.1. Der Winkel W liegt in der Praxis z.B. im Bereich von 1-10°. Je größer die zu erwartenden Toleranzen, z.B. Temperatureinflüsse, Fertigungstolleranzen usw. sind, um so größer sollte der Winkel W gewählt werden. Zwischen der Anordnung der Sendespulen 2.1, 2.2 und der Empfangsspule 1.9 besteht - im Ausführungsbeispiel vom jeweiligen Mittelpunkt aus gemessen - der Abstand A, der bei gleich großer, aber komplementärer Spannung an den Sendespulen 2.1 und 2.2 in etwa den Bereich bestimmt, in dem der örtliche Punkt 1.3 der Entkopplung zu liegen kommt. Statt einer Winkeldrehung sind auch andere Anordnungen wie z.B. eine Verschiebung der Sendespulen zueinander denkbar, so dass sich eine unterschiedliche Überdeckung der Empfangsspule 1.9 ergibt. Damit wird die Empfangsspule von den vorzugsweise zwei Sendespulen 2.1, 2.2 mit unterschiedlichen Flächenmaßen überdeckt. Solange das Ziel erreicht wird, dass eine Verschiebung des örtlichen Punkts der Auslöschung bei entsprechender Bestromung der Sendespulenteile erreichbar ist, ist es gleichgültig, durch welche geometrische Anordnung der Sendespulen gegenüber der Empfangsspule dies erreicht oder erleichtert wird.

Ideal für die Realisierung der oben beschriebenen Erfindung hat sich ein Verfahren mit einer Amplitudenregelung gemäß der Eingangs genannten EP 706 648 B1 für die Erstellung eines empfindlichen Metalldetektors herausgestellt. Andere Verfahren sind jedoch denkbar, solange bei Bestromung nur eines ersten Teils der Sendespule der Punkt der optimalen Auslöschung sich in eine erste Richtung z.B. nach rechts zum Punkt 5.1 verschiebt, während bei Bestromung eines zweiten Teils der Sendespule der Punkt der optimalen Auslöschung sich in eine weitere, vorzugsweise der ersten Richtung entgegengesetzten zweiten Richtung z.B. nach links zum Punkt 6.1 verschiebt. Ein Regelungsverfahren sorgt dann dafür, dass eine Verschiebung des örtlichen Punktes der optimalen Auslöschung ausgeregelt wird und somit eine kontinuierliche Auslöschung des Empfangssignals 1.11 erfolgt.

Fig. 4 zeigt hier als Ausführungsbeispiel einer Sensorelektronik mit einer geschlossenen Regelung zur Stabilisierung des örtlichen Punktes der optimalen Auslöschung in der Empfangsspule 1.9 eines in den Sendespulen 2.1 und 2.2 erzeugten Magnetfeldes. Ein Taktgenerator 4.8 liefert ein erstes Taktsignal 4.13 an eine erste geregelte Stromquelle 4.10 und ein zweites invertiertes Taktsignal 4.12 an eine zweite geregelte Stromquelle 4.9. Die Frequenz des Taktgenerators kann je nach Induktivität der Spulen gewählt werden, im Ausführungsbeispiel liegt sie bei ca. 120 kHz. Das Signal kann z.B. ein Rechteck- oder Sinussignal sein. Die erste geregelte Stromquelle 4.10 speist den Anschluss 2.4 der unteren Sendespule 2.2. Analog dazu speist die zweite geregelte Stromquelle 4.9 den Anschluss 2.3 der oberen Sendespule 2.1. Das an der Empfangsspule 1.9 anliegende Signal wird mit dem Wechselspannungsverstärker 4.5 - im Folgenden Verstärker genannt - verstärkt.

Das Ausgangssignal des Verstärkers 4.5 wird dem Synchrondemodulator 4.6 zugeführt. Dieser erhält ein zur Demodulation nötiges erstes Taktsignal über 4.18 und ein zweites Taktsignal 4.19 aus dem Taktgenerator 4.8. Im einfachsten Fall wird der Synchrondemodulator 4.6 das Ausgangssignal des Verstärkers 4.5 während des gesamten Abschnitts einer Taktphase synchron den entsprechenden Eingängen des integrierenden Komparators 4.7 zuführen. In diesem Fall ist das Taktsignal 4.18 und 4.19 so lang wie die Sendetaktphasen.

Bei gleicher Spannung des ersten Eingangssignals 4.15 und des zweiten Eingangssignals 4.17 des integrierenden Komparators 4.7 entsteht somit kein taktsynchroner Signalanteil an der Empfangsspule 1.9. Dabei wird z.B. bei Metalleinfluss von außen der Durchschnittswert eines ersten Taktsignals an der Empfangsspule 1.9 mit dem Durchschnittswert des zweiten Taktsignals verglichen. Im ausgeregelten Zustand entsprechen bereits die an den Eingängen des Verstärkers 4.5 vorliegenden Empfangssignale einander und damit einem Nullzustand am Ausgang des Verstärkers, so dass der Verstärker 4.5 am Eingang lediglich Rauschen sieht. Daher kann er sehr hoch verstärken, bzw. als hoch verstärkender Begrenzerverstärker ausgeführt werden. Dasselbe gilt auch im ausgeregelten Zustand für das erste Eingangssignal 4.15 und das zweite Eingangssignal 4.17. Liegt am Ausgang des Komparators 4.7 kein diesem Nullzustand entsprechendes Signal an, wird der Regelwert 4.16 solange nachgeführt und dadurch der Strom in den Sendespulen 2.1, 2.2 solange geregelt, bis dieser Zustand erreicht ist.

Während der Länge des Taktabschnittes weist das Ausgangssignal der Empfangsspule 1.9 geringe, von der Metallart bestimmte Amplitudenverläufe auf. Zur besseren Analyse der Metalleigenschaften kann der Abtastbereich des Synchrondemodulators deshalb auch nur abschnittsweise in den Taktzyklen gewählt werden. Dazu wird das zur Demodulation benötigte erste und zweite Taktsignal 4.18 und 4.19 entsprechend verkürzt und in den für die Metallanalyse benötigten Abschnitt der Taktphase gelegt. Die Abtastzeitpunkte sind dabei frei wählbar. Sie können z.B. in kleinen Schritten von z.B. einigen zig Nanosekunden gewählt werden und an beliebigen vorgegebenen oder vorgebbaren Stellen des Taktabschnitts bzw. Taktsignals liegen, um bestimmte Informationen aus dem Empfangssignal zu gewinnen.

Die durch den Synchrondemodulator 4.6 den beiden Taktsignalen 4.12 und 4.13 zuordenbaren Ausgangssignale des Synchrondemodulators 4.6 werden vom integrierenden Komparator 4.7 auf Amplitudenunterschiede untersucht. Der Komparator kann als hochverstärkende Vergleicherschaltung ausgeführt sein. Jede noch so kleine Abweichung der Eingangsspannungen bzw. Eingangssignale 4.15 und 4.17 führt zu einer entsprechenden Abweichung des Regelwerts 4.16 vom momentanen Wert. In der Praxis haben sich "open loop" Verstärkungen bis zu 240 dB bewährt. Dies kann z.B. durch zwei hinter einander liegende, wechselspannungsmäßig bedämpfte Operationsverstärker mit einer DC-Gegenkoppelung über den gesamten Regelkreis, also unter Einbeziehung der Kopplung zwischen Sendespulen und Empfangsspule, bestehen. Die geregelten Stromquellen 4.9 und 4.10 werden mittels Invertierstufe 4.11 gegeneinander mit dem Regelwert 4.16 invertiert angesteuert, um den Zustand wieder herzustellen, bei dem gleich große Amplituden der Eingangssignale am Komparator 4.7 anstehen, d.h. bei dem aus den beiden Signalverläufen keine Differenzen an den Eingängen des Komparators 4.7 auftreten. Steigt der Strom einer der geregelten Stromquellen, so fällt sie in der anderen entsprechend ab.

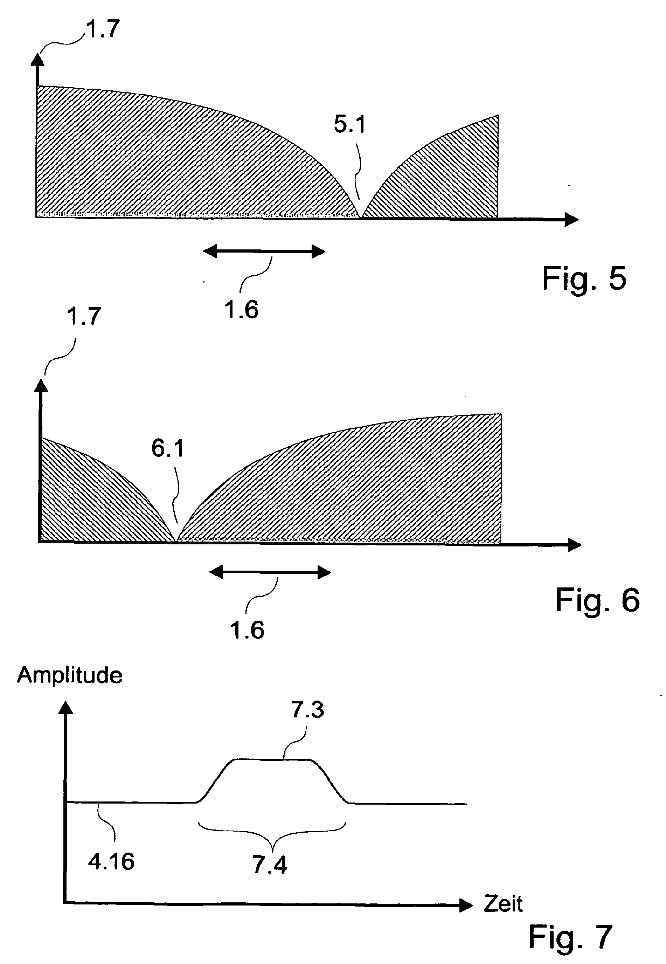

Durch die Verschiebung des Stromes in beiden Spulenhälften bzw. Sendespulen wird der örtliche Punkt der optimalen Auslöschung in einem weiten Bereich stufenlos verschoben. Die Größe des Bereichs ist abhängig von der Größe der verwendeten Spule. Er kann z.B. bei einem Spulendurchmesser von 50 mm z.B. +/- 5 mm betragen. Fig. 5 zeigt die Verschiebung des örtlichen Punktes 5.1 der optimalen Auslöschung nach rechts, wenn die untere Sendespule 2.2 der Sendespulenanordnung einen höheren Strom erhält als die obere Sendespule 2.1. Im umgekehrten Fall der Sendeströme wandert der Punkt 6.1 der optimalen Auslöschung gemäß Fig. 6 nach links. Die Regelschaltung sorgt nun dafür, dass der ermittelte Wert für den Punkt der optimalen Auslöschung ständig so nachgeregelt wird, dass kein Differenzsignal am Synchrondemodulator 4.6 anliegt. Dies führt dazu, dass zeitveränderliche bzw. dynamische Änderungen im Umfeld des Metalldetektors wie z.B. eine Metallannäherung als Änderungen des Regelwerts 4.16 wahrgenommen werden.

Ohne den Einfluss von Metall im sensoraktiven Bereich stellt sich daher ein Gleichgewicht der Sendeströme in der Art ein, dass an der Empfangsspule 1.9 keine taktsynchronen Anteile entstehen und somit der Punkt der optimalen Auslöschung immer eingehalten wird. Der Regelwert 4.16 am Regelausgang der Regelschaltung in Fig. 4 nimmt somit gemäß Fig. 7 einen bestimmten elektrischen Wert ein, der der örtlichen Position des Ortes der optimalen Auslöschung entspricht. Eine Metallannäherung 7.4 verändert den Ort der optimalen Auslöschung. Somit entsteht in der Empfangsspule 1.9 ein Signal mit taktsynchronen Anteilen, die durch die Synchrongleichrichtung detektiert und sofort durch die kontinuierliche Nachregelung der Sendeströme in 4.9 und 4.10 nachgeregelt wird, bis die taktsynchronen Anteile in der Empfangsspule ausgelöscht sind. Fig. 7 zeigt den Ruhezustand des Regelwertes 4.16 und die Veränderung im Bereich einer Metallannäherung 7.4. Zur Detektion einer Metallannäherung kann nun z.B. der Unterschied zwischen Ruhezustand 4.16 und verändertem Regelwert 7.3 ausgewertet werden.

In diesem System der geschlossenen Regelung wird also nicht wie im Stand der Technik die Größe des an der Empfangsspule entstehenden Signals bei Metallannäherung gemessen und in einer entsprechenden Anzeige dem Benutzer sichtbar gemacht, sondern der Regelwert oder besser noch die Veränderung des Regelwertes, der zur örtlichen Verschiebung des Punktes der optimalen Auslöschung bei Metallannäherung eintritt.

Die Nachregelung erfolgt im µs-Bereich, so das auch bei schneller Metallüberstreichung das Ausgangssignal der Empfangsspule immer auf einen Zustand ohne taktsynchrone Anteile am Synchrondemodulator gehalten wird. Prinzipiell reicht es dabei aus, wenn der Strom in nur einer Sendespule bzw. Sendespulenhälfte geregelt wird, jedoch wird dadurch der Dynamikbereich eingeschränkt.

Im Fall einer Fertigungstoleranz, eines Temperatureinflusses oder auch des Bodeneinflusses ändert sich zwar der Regelwert 4.16 (Offset), jedoch bleibt die optimale Auslöschung des Signals 1.11 an der Empfangsspule 1.9 in jedem Falle erhalten.

Funktion der geteilten Sendespulenanordnung:

Im Idealfall werden beide Sendespulen 2.1 und 2.2 gleich bestromt bzw. mit gleicher Spannung versorgt und verhalten sich wie eine Spule. Nehmen wir an, dass der Punkt der optimalen Auslöschung wie in Fig. 1 in der Mitte liegt.

Wird "nur" die Sendespule 2.2 im Verhältnis zur Sendespule 2.1 bestromt, verändert sich der Punkt 5.1 der optimalen Auslöschung und wandert gemäß Fig. 5 "nach rechts". Das heißt, die Sendespulenanordnung müsste gegenüber der Empfangsspule nach rechts verschoben werden, um den Punkt der optimalen Auslöschung zu erreichen. Umgekehrt lässt eine ausschließliche Bestromung der Sendespule 2.1 den Punkt 6.1 der optimalen Auslöschung gemäß Fig. 6 "nach links" wandern. Die Sendespulenanordnung müsste daher nach links verschoben werden, um den Punkt der optimalen Auslöschung zu erreichen. Da jedoch alle möglichen Stromwertverhältnisse durch die geschlossene Regelung in Fig. 4 möglich sind, kann also der Punkt der optimalen Auslöschung bei feststehender Sendespulenanordnung immer mit Sicherheit getroffen werden. Dies ist besonders wichtig, wenn relativ große Fertigungstolleranzen der Spulen in Kauf genommen werden müssen. Eine "Einschaltung" von Hilfswicklungen wie in der DE 10 2004 047 189 A1 oder mechanisch verschiebbarer Massen entfällt.

Ein weiterer Vorteil liegt in der hohen Dynamik ohne die oft übliche "Begrenzung" der Messwertangaben bei großen Metallteilen, wenn ein bestimmter Abstand unterschritten wird.

In der Darstellung gemäß Fig. 2 wurde die Sendespule rund dargestellt, jedoch sind selbstverständlich auch andere Formen möglich, z.B. die aus dem Stand der Technik bekannte "double D" Anordnung oder eine unsymmetrische Anordnung der beiden versetzten Sendespulen oberhalb und unterhalb der Empfangsspule. Auch lässt sich diese Anordnung analog zur oben beschriebenen Wirkungsweise auch bei differentiellen Messmethoden wie z.B. der Verwendung zweier Empfangsspulen innerhalb der Sendespulen verwenden (Patent DE 36 19 308 C1).

Wesentlich ist, dass die Sendespule, oder wenigstens ein wesentlicher Teil von ihr, geteilt wird und bei gleicher Bestromung der beiden Spulenteile eine Wirkung auf die Empfangsspule oder -spulen ausübt, bei der ein örtlicher Punkt der optimalen Auslöschung 1.3 entsteht, und bei Bestromung nur einer ersten Hälfte oder eines ersten Teils der Sendespule der Punkt der optimalen Auslöschung sich in eine erste Richtung z.B. nach rechts zum Punkt 5.1 verschiebt, während bei Bestromung einer zweiten Hälfte oder eines zweiten Teils der Sendespule der Punkt der optimalen Auslöschung sich in eine der ersten Richtung entgegengesetzten zweiten Richtung z.B. nach links zum Punkt 6.1 verschiebt. Weiterhin ist eine kontinuierliche Regelung der Ströme der beiden Sendespulen vorhanden, die zu einer Verschiebung des örtlichen Punktes der optimalen Auslöschung führt, und somit eine kontinuierliche Auslöschung des Empfangssignals 1.11 bewirkt. Zur Auswertung der Metallanwesenheit wird der Regelwert der differentiellen Stromregelung der beiden Sendespulenhälften herangezogen.

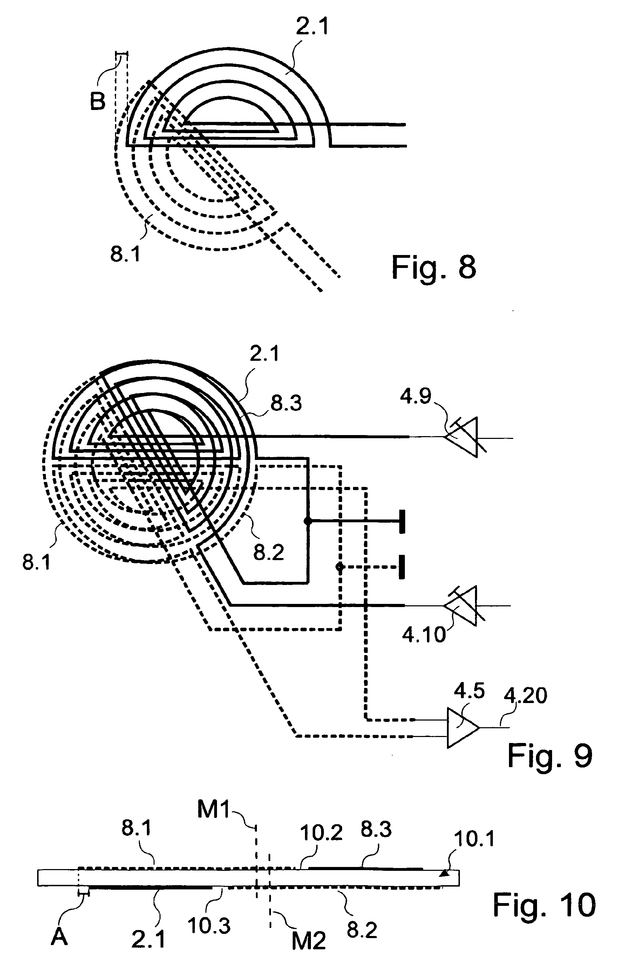

Die Fig. 8 bis 11 zeigen ein weiteres Ausführungsbeispiel der Erfindung. Wie im ersten Ausführungsbeispiel wird der Punkt der optimalen Auslöschung mit einfachen Mitteln und einer geschlossenen Regelung immer an exakt der gleichen örtlichen Stelle bleiben. Dies wird dadurch erreicht, dass gemäß Fig. 8, 9 mehrere Sendespulen 2.1, 8.3, vorzugsweise zwei im wesentlichen identische und spiegelbildliche Spulenhälften verwendet werden. Ebenso werden als Empfangsspule mehrere Empfangsspulen 8.1, 8.2, verwendet, die im Ausführungsbeispiel ebenfalls durch zwei im wesentlichen identische und spiegelbildliche Spulenhälften gebildet sind. Eine andere Aufteilung ist jedoch möglich, wenn damit bei entsprechende Bestromung eine kontinuierliche bzw. stetige und damit nicht ruckartige Verschiebung des örtlichen Punkts des Auslöschung erreichbar ist.

Figur 3 zeigt die Überlagerung von Empfangsspule und den dortigen Sendespulenhälften im ersten Ausführungsbeispiel. Um den für jene Anordnung benötigen Platzbedarf deutlich zu reduzieren, werden im zweiten Ausführungsbeispiel der Fig. 8 bis 11 mehrere Sendespulen 2.1, 8.3 und mehrere Empfangsspulen 8.1, 8.2 verwendet. Figur 8 zeigt zum besseren Verständnis nur eine erste Sendespulenhälfte 2.1 und eine erste, gestrichelt dargestellte Empfangsspulenhälfte 8.1. Die entsprechenden weiteren Hälften ergänzen jeweils die halbkreisförmigen Spulen zur Kreisform, so dass sich ein Bild gemäß Fig. 9 ergibt.

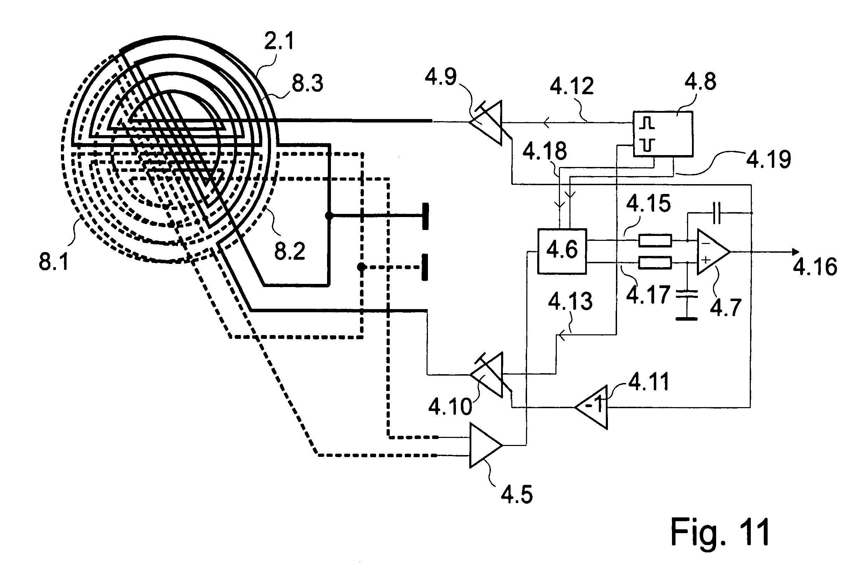

Die Sendespulen 2.1, 8.3 und die Empfangsspulen 8.1, 8.2 sind wie im ersten Ausführungsbeispiel induktiv miteinander gekoppelt und zur Wechselwirkungsentkopplung überlappend angeordnet. Ein Punkt optimaler Auslöschung ist durch eine Verdrehung / Verschiebung grundsätzlich erreichbar, worauf weiter unten noch eingegangen wird. Über eine Sensorelektronik, die in Fig. 11 dargestellt ist, erfolgt die Bestromung der Sendespulen und die Auswertung des Empfangssignals 4.20 der Empfangspulen. Die Sendespulen 2.1, 8.3 üben bei gleicher Bestromung eine Wirkung auf die Empfangsspulen aus, bei der ein örtlicher Punkt 1.3 der optimalen Auslöschung entsteht, also an dem eine Überlagerung der Spulen fester geometrischer Anordnung zu einem Punkt auf einer zwischen den beiden Sendespulen gedachten Linie führt, in dem sich das bei Stromfluss durch die beiden Spulen dabei hervorgerufene Magnetfeld in den Empfangsspulen auslöscht. Bei Bestromung einer ersten Sendespule 2.1 bewegt sich der Punkt der optimalen Auslöschung in einer ersten Richtung, während er sich bei Bestromung der weiteren Sendespule 8.3 in einer zweiten, vorzugsweise der ersten Richtung entgegengesetzten Richtung bewegt. Während im ersten Ausführungsbeispiel der Punkt der optimalen Auslöschung bei gleicher Bestromung durch den Abstand A bestimmt wurde, wird er im zweiten Ausführungsbeispiel durch die Verdrehung der oberen Spulenhälften bestehend aus wenigstens je einer Sendespule und Empfangsspule gegenüber den unteren Spulenhälften bestimmt, die auch wenigstens aus je einer Sendespule und Empfangspule bestehen.

Durch die Regelschaltung zur Regelung der Amplitude der Ströme der Sendespulen ist es möglich, den örtlichen Punkt der optimalen Auslöschung so zu verschieben, dass sich eine Auslöschung des Empfangssignals ergibt. Der örtliche Punkt der optimalen Auslöschung ist seinerseits wiederum abhängig von äußeren Einflüssen auf das Magnetfeld, so dass zum Beispiel eine Metallannäherung dadurch detektiert werden kann, das eine entsprechende Nachregelung erfolgt. Der dabei ermittelte Regelwert 4.16 ist zugleich der Messwert.

Gemäß den Figuren 8 bis 10 ist jeweils wenigstens eine Sendespule 2.1; 8.3 und wenigstens eine Empfangsspule 8.2; 8.1 in einer ersten Ebene 10.2 und in wenigstens einer weiteren Ebene 10.3 angeordnet. Die in der ersten Ebene angeordneten Spulen sind zu den auf der wenigstens einen weiteren Ebene angeordnete Spulen um einen Zentriwinkel, wie insbesondere in Fig. 8 ersichtlich, hinsichtlich einer angenommenen gemeinsamen Mittelachse M1, M2 verdreht. Liegen die Spulen tatsächlich umfangsmäßig kongruent übereinander, so ergibt sich je nach Einsatzart wenigstens ein Zentriwinkel, an dem die Auslöschung stattfindet. Um nun wieder in einen Zustand zu kommen, in dem die Regelschaltung regeln und damit einen Regelwert erzeugen kann, werden ausgehend von diesem "ausgelöschten Zustand" die Ebenen, auf denen die Spulen angeordnet sind, parallel zueinander verschoben. Mit anderen Worten werden ihre Mittelachsen M1, M2 um den Abstand B in Fig. 8 bzw. 10 zueinander verschoben. Dieser Abstand kann sehr gering sein, in der Regel genügen 0,1 bis zwei Prozent des Spulendurchmessers.

Fig. 10 zeigt, dass die der Sendespule 2.1 in der Ebene 10.3 gegenüberliegende gespiegelte Spule die Empfangsspule 8.2 ist, während die erste Empfangsspule 8.1 durch die zweite Sendespule 8.3 ergänzt wird. Die Sendespule 2.1 und die Empfangsspule 8.2 liegen in der weiteren Ebene 10.3 und die Sendespule 8.3 und die Empfangsspule 8.1 liegen auf der ersten Ebene 10.2.

Figur 10 zeigt die Spulenanordnung als Printlösung im Schnitt, wobei nur zwei Ebenen 10.2 und 10.3 dargestellt sind. Es versteht sich von selbst, dass gerade bei einer Printlösung auch weitere Ebenen mit weiteren Spulen denkbar sind. Das Trägermaterial 10.1, also die Platine trägt die oben und unten liegenden Planarspulen. Die Sendespule 8.3 und die Empfangsspule 8.1 liegen in dieser Darstellung gemeinsam oben, während die Sendespule 2.1 und die Empfangsspule 8.2 unten liegen. Bei entsprechender Stellung der oberen Spulen gegenüber den unteren Spulen wird das von den Sendespulen ausgesandte Signal in den Empfangsspulen 8.1, 8.2 vollständig ausgelöscht. Während im ersten Ausführungsbeispiel ein Kippwinkel zu einer Verschiebung des Mittelpunkts der Spulenanordnung führt, wird im zweiten Ausführungsbeispiel eine Verschiebung um den Abstand B vorgenommen, der zum Beispiel 0,5 mm betragen kann. Grundsätzlich können aber Kippung und Verschiebung bedarfsweise auch miteinander kombiniert werden. Wesentlich ist, dass der Punkt der optimalen Auslöschung in Folge der geschlossenen Regelung, wie in Fig. 11 dargestellt, immer an möglichst exakt der gleichen örtlichen Stelle gehalten werden kann, damit der Regelwert als Messwert verwendbar ist. Die Empfangsspulen können in Reihe oder parallel geschaltet sein, solange eine Auslöschung möglich ist.

Die Sendespulen 2.1, 8.3 und die Empfangsspulen 8.1, 8.2 werden durch mehrere Spulenteile gebildet, die zusammenhängend die Form einer vorzugsweise kreisförmigen Anordnung ausbilden, vorzugsweise werden die Sendespulen und Empfangsspulen wie im Ausführungsbeispiel durch im wesentlichen zwei gleichgroße Spulenhälften gebildet.

Fig. 11 zeigt als Ausführungsbeispiel eine Sensorelektronik mit einer geschlossenen Regelung zur Stabilisierung des örtlichen Punktes der optimalen Auslöschung in den Empfangsspulen 8.1, 8.2 eines in den Sendespulen 2.1 und 8.3 erzeugten Magnetfeldes. Ein Taktgenerator 4.8 liefert ein erstes Taktsignal 4.13 an eine erste geregelte Stromquelle 4.10 und ein zweites invertiertes Taktsignal 4.12 an eine zweite geregelte Stromquelle 4.9. Die Frequenz des Taktgenerators kann je nach Induktivität der Spulen gewählt werden, im Ausführungsbeispiel liegt sie bei ca. 120 kHz. Das Signal kann z.B. ein Rechteck- oder Sinussignal sein. Die erste geregelte Stromquelle 4.10 speist den Anschluss der einen Sendespule. Analog dazu speist die zweite geregelte Stromquelle 4.9 den Anschluss der anderen Sendespule. Das an den Empfangsspulen anliegende Signal wird mit dem Wechselspannungsverstärker 4.5 - im Folgenden Verstärker genannt - verstärkt. Das Ausgangssignal des Verstärkers 4.5 wird dem Synchrondemodulator 4.6 zugeführt. Dieser erhält ein zur Demodulation nötiges erstes Taktsignal über 4.18 und ein zweites Taktsignal 4.19 aus dem Taktgenerator 4.8. Im einfachsten Fall wird der Synchrondemodulator 4.6 das Ausgangssignal des Verstärkers 4.5 während des gesamten Abschnitts einer Taktphase synchron den entsprechenden Eingängen des integrierenden Komparators 4.7 zuführen. In diesem Fall ist das Taktsignal 4.18 und 4.19 so lang wie die Sendetaktphasen.

Bei gleicher Spannung des ersten Eingangssignals 4.15 und des zweiten Eingangssignals 4.17 des integrierenden Komparators 4.7 entsteht somit kein taktsynchroner Signalanteil an den Empfangsspulen 8.1, 8.2. Dabei wird z.B. bei Metalleinfluss von außen der Durchschnittswert eines ersten Taktsignals an den Empfangsspulen 8.1, 8.2 mit dem Durchschnittswert des zweiten Taktsignals verglichen. Im ausgeregelten Zustand entsprechen bereits die an den Eingängen des Verstärkers 4.5 vorliegenden Empfangssignale einem Nullzustand, so dass der Verstärker 4.5 am Eingang lediglich Rauschen sieht. Daher kann er sehr hoch verstärken, bzw. als hoch verstärkender Begrenzerverstärker ausgeführt werden. Dasselbe gilt auch im ausgeregelten Zustand für das erste Eingangssignal 4.15 und das zweite Eingangssignal 4.17. Liegt am Ausgang des Komparators 4.7 kein diesem Nullzustand entsprechendes Signal an, wird der Regelwert 4.16 solange nachgeführt und dadurch der Strom in den Sendespulen 2.1, 8.3 solange geregelt, bis dieser Zustand erreicht ist.

Die Regelschaltung sorgt nun dafür, dass der ermittelte Wert für den Punkt der optimalen Auslöschung ständig so nachgeregelt, wird, dass kein Differenzsignal am Synchrondemodulator 4.6 anliegt. Dies führt dazu, dass zeitveränderliche bzw. dynamische Änderungen im Umfeld des Metalldetektors wie zum Beispiel eine Metallannäherung als Änderung des Regelwerts 4.16 wahrgenommen werden.

### Bezugszeichenliste

| | |
|---|---|
| 1.1 | Startpunkt der Verschiebung |
| 1.2 | Signal mit Phasenlage 0° |
| 1.3 | Entkopplungspunkt |
| 1.4 | Signal mit Phasenlage 180° |
| 1.5 | Endpunkt der Verschiebung |
| 1.6 | Doppelpfeil Verschiebung Empfangsspule zur Sendespule |
| 1.7 | Amplitude der Empfangsspule |
| 1.9 | Empfangsspule |
| 1.10 | Sendespule (Stand der Technik) |
| 1.11, 4.20 | Empfangssignal |
| 2.1 | erste obere Spulenhälfte |
| 2.2 | zweite untere Spulenhälfte |
| 2.3 | Anschluss der ersten oberen Spulenhälfte |
| 2.4 | Anschluss der zweiten unteren Spulenhälfte |
| 2.5 | Zusammengefasste Anschlüsse der ersten und zweiten Spulenhälfte |
| 2.6 | Zu 2.7 komplementäre Spannung |
| 2.7 | Zu 2.6 Komplementäre Spannung |
| 3.1 | Horizontale Achse der Empfangsspule |
| 3.2 | Horizontale Achse der Sendespulenanordnung |
| W | Winkel der Verkippung |
| A, B | Abstand |
| 4.5 | Wechselspannungsverstärker |
| 4.6 | Synchrondemodulator |
| 4.7 | Integrierender Komparator |
| 4.8 | Taktgenerator |
| 4.9 | Zweite geregelte Stromquelle |
| 4.10 | Erste geregelte Stromquelle |
| 4.11 | Invertierstufe |
| 4.12 | Zweites Taktsignal |
| 4.13 | Erstes Taktsignal |
| 4.15 | Erstes Eingangssignal des integrierenden Komparators |
| 4.16 | Regelwert |
| 4.17 | Zweites Eingangssignal des integrierenden Komparators |
| 4.18 | Für Demodulation benötigtes erstes Taktsignal |
| 4.19 | Für Demodulation benötigtes zweites Taktsignal |
| 5.1 | Nach rechts verschobener Punkt der optimalen Auslöschung |
| 6.1 | Nach links verschobener Punkt der optimalen Auslöschung |
| 7.3 | Regelwert bei Metallannäherung |
| 7.4 | Bereich einer Metallannäherung |
| 8.1 | erste Empfangsspulenhälfte |
| 8.2 | zweite Empfangsspulenhälfte |
| 8.3 | zweite Sendespulenhälfte |
| 10.1 | Trägermaterial (Platine) |
| 10.2 | erste Ebene |
| 10.3 | weitere Ebene |
| M1, M2 | Mittelachse |

## Patentansprüche

1. Sensor zur Ortung metallischer Objekte, insbesondere im PI-Modus betriebener Metalldetektor, mit mehreren Sendespulen (2.1, 2.2) und wenigstens einer Empfangsspule (1.9), welche induktiv miteinander gekoppelt und zur Wechselwirkungsentkopplung teilweise überlappend angeordnet sind, wobei ein Punkt (1.3) optimaler Auslöschung der Wechselwirkung erreichbar ist,
sowie mit einer Sensorelektronik zur Bestromung der Sendespulen und zur Auswertung eines Empfangssignals (1.11) der Empfangsspule,
**dadurch gekennzeichnet,**
- **dass** die Sendespulen (2.1, 2.2) wenigstens teilweise die wenigstens eine Empfangsspule überlappen,
- **dass** die Sendespulen (2.1, 2.2) bei gleicher Bestromung eine Wirkung auf die wenigstens eine Empfangsspule (1.9) ausüben, bei der ein örtlicher Punkt (1.3) der optimalen Auslöschung entsteht,
- **dass** bei Bestromung einer ersten Sendespule (2.1) der Punkt der optimalen Auslöschung sich in eine erste Richtung bewegt, während bei Bestromung einer weiteren Sendespule (2.2) der Punkt der optimalen Auslöschung sich in eine weitere Richtung bewegt, und
- **dass** eine Regelschaltung zur Regelung der Ströme der Sendespulenteile vorgesehen ist, die zu einer Bewegung des örtlichen Punktes der optimalen Auslöschung führt, die eine Auslöschung des Empfangssignals (1.11) bewirkt.

2. Sensor nach Anspruch 1, **dadurch gekennzeichnet, dass** die Sendespulen durch mehrere Sendespulenteile gebildet sind, die zusammen etwa die Form einer vorzugsweise der wenigstens einen Empfangsspule (1.9) entsprechenden Sendespule aufweisen.

3. Sensor nach einem der Ansprüche 1 oder 2, **dadurch gekennzeichnet, dass** vorzugsweise zwei Sendespulen (2.1, 2.2) die Empfangsspule (1.9) mit unterschiedlichen Flächenmaßen überdecken.

4. Sensor nach einem der vorhergehenden Ansprüche, **dadurch gekennzeichnet, dass** mehrere Empfangsspulen (8.1, 8.2) und Sendespulen (2.1, 8.3) vorgesehen sind, wobei jeweils wenigstens eine Sendespule (2.1;8.3) und wenigstens eine Empfangsspule (8.2;8.1) in einer ersten Ebene (10.2) und in wenigstens einer weiteren Ebene (10.3) angeordnet sind, wobei die in der ersten Ebene angeordneten Spulen zu den auf wenigstens einer weiteren Ebene angeordneten Spulen zur Auslöschung der Wechselwirkung der Spulen um einen Zentriwinkel hinsichtlich ihrer angenommenen gemeinsamen Mittelachse (M1, M2) verdreht sind, wobei die Mittelachsen (M1, M2) zueinander versetzt oder verschoben sind.

5. Sensor nach Anspruch 4, **dadurch gekennzeichnet, dass** der Umfang der Sendespulen (2.1, 8.3) etwa nahezu kongruent zum Umfang der Empfangspulen (8.1, 8.2) ist.

6. Sensor nach Anspruch 4 oder 5, **dadurch gekennzeichnet, dass** die Sendespulen (2.1, 8.3) und/oder die Empfangsspulen (8.1, 8.2) durch mehrere Spulenteile oder durch zwei im Wesentlichen gleich große Spulenhälften gebildet sind.

7. Sensor nach einem der vorhergehenden Ansprüche, **dadurch gekennzeichnet, dass** eine Achse (3.2), vorzugsweise eine Symmetrieachse der Sendespulenanordnung, welche die Sendespulen (2.1, 2.2) umfasst, gegenüber einer Achse (3.1), vorzugsweise eine Symmetrieachse, der Empfangsspule (1.9) um einen Winkel (W) gekippt ist.

8. Sensor nach einem der vorhergehenden Ansprüche, **dadurch gekennzeichnet, dass** die Mittelpunkte einer Anordnung der Sendespulen (2.1, 2.2) und der Empfangsspule (1.9) um einen Abstand (A) voneinander beabstandet sind, der bei gleich großen Strömen an den Sendespulen ungefähr den Bereich bestimmt, in dem der örtliche Punkt (1.3) zu liegen kommt.

9. Sensor nach einem der vorhergehenden Ansprüche, **dadurch gekennzeichnet, dass** ein Komparator (4.7) zum Vergleich der den Sendespulen (2.1, 2.2) zugeordneten Spannungssignale zur Ermittlung eines Regelwertes vorgesehen ist, und dass wenigstens eine geregelte Stromquelle (4.9, 4. 10) vorgesehen ist, in der der Regelwert zur Regelung der Amplitude des den Sendespulen zugeführten Stroms die Amplitude vorzugsweise kontinuierlich so regelt, dass die Amplituden der Spannungssignale an den Eingängen des Komparators (4.7) im Wesentlichen gleich groß sind oder dass aus beiden Taktabschnitten eines Taktzyklus keine Differenz der Spannungssignale an den Eingängen des Komparators (4.7) besteht.

10. Verfahren zur Ortung metallischer Objekte mit einem Sensor, insbesondere mit einem im PI-Modus betriebenen Metalldetektor, mit mehreren Sendespulen (2.1, 2.2) und wenigstens einer Empfangsspule (1.9), welche induktiv miteinander gekoppelt und zur Wechselwirkungsentkopplung teilweise überlappend angeordnet sind, wobei ein Punkt (1.3) optimaler Auslöschung erreichbar ist, an dem eine Auslöschung des Empfangssignals (1.11) bewirkt wird,
wobei mittels einer Sensorelektronik die Sendespulen bestromt werden und ein Empfangssignal (1.11) der Empfangsspule ausgewertet wird,
**dadurch gekennzeichnet,**
- **dass** mehrere Sendespulen (2.1, 2.2) von der Sensorelektronik bestromt werden, die wenigstens teilweise die Empfangsspule überlappen,
- **dass** die Sendespulen bei gleicher Bestromung eine Wirkung auf die wenigstens eine Empfangsspule (1.9) ausüben, bei der ein örtlicher Punkt (1.3) der optimalen Auslöschung entsteht,
- **dass** bei Bestromung einer Sendespule (2.1) der Punkt der optimalen Auslöschung sich in eine erste Richtung bewegt, während bei Bestromung einer weiteren Sendespule (2.2) der Punkt der optimalen Auslöschung sich in eine weitere Richtung bewegt, und
- **dass** die Ströme der Sendespulen so geregelt werden, dass sich eine Verschiebung des örtlichen Punktes der optimalen Auslöschung ergibt, die eine Auslöschung des Empfangssignals (1.11) bewirkt.

11. Verfahren nach Anspruch 10, **dadurch gekennzeichnet, dass** als Sendespulen mehrere Sendespulenteile verwendet werden, die zusammen etwa die Form einer vorzugsweise der Empfangsspule (1.9) entsprechenden Sendespule aufweisen, und/oder als Sendespulen zwei im Wesentlichen gleich große Sendespulenhälften verwendet werden.

12. Verfahren nach einem der Ansprüche 10 oder 11, **dadurch gekennzeichnet, dass** eine Achse (3.2), vorzugsweise eine Symmetrieachse, der Sendespulenanordnung, welche die Sendespulen (2.1, 2.2) umfasst, gegenüber einer Achse (3.1), vorzugsweise einer Symmetrieachse, der Empfangsspule (1.9) um einen winkel (W) gekippt angeordnet wird.

13. Verfahren nach einem der Ansprüche 10 bis 12, **dadurch gekennzeichnet, dass** die Empfangsspule von den vorzugsweise zwei Sendespulen (2.1, 2.2) mit unterschiedlichen Flächenmaßen überdeckt wird.

14. Verfahren nach einem der Ansprüche 10 bis 13, **dadurch gekennzeichnet, dass** zur Herstellung des Sensors mehrere Empfangsspulen (8.1, 8.2) und mehrere Sendespulen (2.1, 8.3) vorgesehen werden, von denen jeweils wenigstens eine Sendespule (2.1;8.3) und wenigstens eine Empfangsspule (8.2;8.1) in einer ersten Ebene (10.2) und in wenigstens einer weiteren Ebene (10.3) angeordnet werden, wobei die in der ersten Ebene angeordneten Spulen zu den auf wenigstens einer weiteren Ebene angeordneten Spulen um einen Zentriwinkel hinsichtlich ihrer angenommenen gemeinsamen Mittelachse (M1, M2) verdreht werden, bis sich die Wechselwirkung der Spulen auslöscht, wobei dann die Mittelachsen (M1, M2) um einen Abstand (B) zueinander verschoben werden.

15. Verfahren nach einem der Ansprüche 10 bis 14, **dadurch gekennzeichnet, dass** die den Teilen der Sendespule (2.1, 2.2) zugeordneten Spannungssignale zur Ermittlung eines Regelwertes vorzugsweise kontinuierlich verglichen werden, und dass der Regelwert mittels wenigstens einer geregelte Stromquelle (4.9, 4.10) die Amplitude des den Teilen der Sendespule zugeführten Stroms so regelt, dass die Amplituden der Spannungssignale an den Eingängen des Komparators (4.7) im Wesentlichen gleich groß sind.

16. Verfahren nach einem der Ansprüche 10 bis 15, **dadurch gekennzeichnet, dass** die Veränderung des Regelwertes, der zur örtlichen Verschiebung des Punktes (1.3) der optimalen Auslöschung z.B. bei Metallannäherung führt, als Messwert z.B. für eine Metallannäherung verwendet wird.

17. Verfahren nach einem der Ansprüche 10 bis 16, **dadurch gekennzeichnet, dass** die Sendespulen (2.1, 2.2) im Takt eines Taktgenerators (4.8) angesteuert werden und dass die Empfangssignale der Empfangsspule (1.9) im Takt abgetastet werden, wobei die Abtastzeitpunkte frei wählbar sind, in kleinen Schritte vorzugsweise von einigen zig Nanosekunden ausgeregelt werden und an beliebigen vorgegebenen oder vorgebbaren Stellen des Taktabschnitts liegen, um bestimmte Informationen aus dem Empfangssignal zu gewinnen.

## Claims

1. A sensor for the location of metallic objects, in particular a metal detector operated in the PI mode, comprising a plurality of transmitting coil (2.1, 2.2) and at least one receiving coil (1.9) which are inductively coupled to one another and are arranged in partly overlapping manner for the purpose of decoupling the interaction therebetween, so that there can be obtained a point (1.3) of optimal cancellation of the interaction,
and also comprising a sensor electronic system for passing a flow of current through the transmitting coils and for evaluating a received signal (1.11) received by the receiving coil,
**characterized,**
- **in that** the transmitting coils (2.1, 2.2) at least partially overlap the at least one receiving coil,
- **in that**, in the case of equal current flows, the transmitting coils (2.1, 2.2) have an effect upon the at least one receiving coil (1.9) such that a local point (1.3) of optimal cancellation occurs,
- **in that**, in the case of a flow of current through a first transmitting coil (2.1), the point of optimal cancellation moves in a first direction, whereas in the case of a flow of current through a further transmitting coil (2.2), the point of optimal cancellation moves in a further direction, and
- **in that** there is provided a control circuit for regulating the currents through the transmitting coil parts which leads to a movement of the local point of optimal cancellation which causes cancellation of the received signal (1.11).

2. A sensor in accordance with Claim 1, **characterized in that** the transmitting coils are formed by a plurality of transmitting coil parts which together have the approximate shape of a transmitting coil that preferably corresponds to the at least one receiving coil (1.9).

3. A sensor in accordance with Claim 1 or 2, **characterized in that** preferably two transmitting coils (2.1, 2.2) overlap the receiving coil (1.9) with differing surface areas.

4. A sensor in accordance with any of the preceding Claims, **characterized in that** a plurality of receiving coils (8.1, 8.2) and of transmitting coils (2.1, 8.3) are provided, wherein in each case at least one transmitting coil (2.1;8.3) and at least one receiving coil (8.2;8.1) are arranged in a first plane (10.2) and in at least one further plane (10.3), wherein the coils arranged in the first plane are rotated relative to the coils arranged on the at least one further plane through a central angle with respect to their notional common central axis (M1, M2) for the purposes of cancelling the interaction of the coils, wherein the central axes (M1, M2) are offset or displaced relative to each other.

5. A sensor in accordance with Claim 4, **characterized in that** the periphery of the transmitting coils (2.1, 8.3) is approximately almost congruent with the periphery of the receiving coils (8.1, 8.2).

6. A sensor in accordance with Claim 4 or 5, **characterized in that** the transmitting coils (2.1, 8.3) and/or the receiving coils (8.1, 8.2) are formed by a plurality of coil parts or by two coil halves of substantially the same size.

7. A sensor in accordance with any of the preceding Claims, **characterized in that** an axis (3.2), preferably an axis of symmetry of the transmitting coil arrangement which comprises the transmitting coils (2.1, 2.2), is tilted through an angle (W) with respect to an axis (3.1), preferably an axis of symmetry, of the receiving coil (1.9).

8. A sensor in accordance with any of the preceding Claims, **characterized in that** the central points of an arrangement of the transmitting coils (2.1, 2.2) and the receiving coil (1.9) are spaced from each other by a distance (A) which approximately determines the range within which the local point (1.3) will lie in the case of equal currents through the transmitting coils.

9. A sensor in accordance with any of the preceding Claims, **characterized in that** there is provided a comparator (4.7) for comparing the voltage signals associated with the transmitting coils (2.1, 2.2) for the purposes of determining a control value, and **in that** there is provided at least one regulated current source (4.9, 4.10) in which the control value for the regulation of the amplitude of the current supplied to the transmitting coils regulates the amplitude in a preferably continuous manner in such a way that the amplitudes of the voltage signals at the inputs of the comparator (4.7) are substantially equal or such that that there is no difference in the voltage signals at the inputs of the comparator (4.7) from the two clock sections of a clock cycle.

10. A method for the location of metallic objects utilising a sensor, in particular a metal detector operated in the PI mode, which comprises a plurality of transmitting coils (2.1, 2.2) and at least one receiving coil (1.9) that are inductively coupled to one another and are arranged in partly overlapping manner for decoupling the interaction therebetween, whereby there can be obtained a point (1.3) of optimal cancellation at which cancellation of the received signal (1.11) is caused,
wherein, by means of a sensor electronic system, a flow of current is passed through the transmitting coils and a received signal (1.11) received by the receiving coil is evaluated,
**characterized**
- **in that** a flow of current is passed through a plurality of transmitting coils (2.1, 2.2) by the sensor electronic system, which transmitting coils overlap the receiving coil at least partially,
- **in that**, in the case of equal current flows, the transmitting coils (2.1, 2.2) have an effect upon the at least one receiving coil (1.9) such that a local point (1.3) of optimal cancellation occurs,
- **in that**, in the case of a flow of current through one transmitting coil (2.1), the point of optimal cancellation moves in a first direction, whereas in the case of a flow of current through a further transmitting coil (2.2), the point of optimal cancellation moves in a further direction, and
- **in that** the currents through the transmitting coils are regulated in such a way that there results a displacement of the local point of optimal cancellation which causes cancellation of the received signal (1.11).

11. A method in accordance with Claim 10, **characterized in that** there are used as transmitting coils a plurality of transmitting coil parts, which together have the approximate shape of a transmitting coil that preferably corresponds to the receiving coil (1.9) and/or there are used as transmitting coils two transmitting coil halves of substantially the same size.

12. A method in accordance with Claim 10 to 11, **characterized in that** an axis (3.2), preferably an axis of symmetry, of the transmitting coil arrangement which comprises the transmitting coils (2.1, 2.2), is arranged such that it is tilted through an angle (W) with respect to an axis (3.1), preferably an axis of symmetry, of the receiving coil (1.9).

13. A method in accordance with any of the Claims 10 to 12, **characterized in that** the receiving coil is overlapped by the preferably two transmitting coils (2.1, 2.2) with differing surface areas.

14. A method in accordance with any of the Claims 10 to 13, **characterized in that** for the production of the sensor there are provided a plurality of receiving coils (8.1, 8.2) and a plurality of transmitting coils (2.1, 8.3), of which in each case at least one transmitting coil (2.1; 8.3) and at least one receiving coil (8.2; 8.1) are arranged in a first plane (10.2) and in at least one further plane (10.3), wherein the coils arranged in the first plane are rotated relative to the coils arranged on the at least one further plane through a central angle with respect to their notional common central axis (M1, M2) until the interaction of the coils is cancelled, wherein the central axes (M1, M2) are then displaced relative to each other by a spacing (B).

15. A method in accordance with any of the Claims 10 to 14, **characterized in that** the voltage signals associated with the parts of the transmitting coil (2.1, 2.2) are compared in a preferably continuous manner for the purposes of determining a control value, and **in that** the control value regulates the amplitude of the current supplied to the parts of the transmitting coil by means of at least one regulated current source (4.9, 4.10) in such a way that the amplitudes of the voltage signals at the inputs of the comparator (4.7) are substantially equal.

16. A method in accordance with any of the Claims 10 to 15, **characterized in that** the change of the control value which leads to the local displacement of the point (1.3) of optimal cancellation e.g. during approach to a metal, is used as a measured value e.g. for the approach to a metal.

17. A method in accordance with any of the Claims 10 to 16, **characterized in that** the transmitting coils (2.1, 2.2) are controlled at the clock rate of a clock pulse generator (4.8) and **in that** the signals received by the receiving coil (1.9) are sampled at the clock rate, wherein the sampling time points are freely selectable, are controlled in small steps of preferably a few nanoseconds and are located at arbitrarily predefined or predefinable positions in the clock period in order to obtain specific information from the received signal.

## Revendications

1. Senseur pour la localisation d'objets métalliques, en particulier, détecteur de métaux fonctionnant sur un mode d'induction de pulsations, comportant plusieurs bobines d'émission (2.1, 2.2) et au moins une bobine de réception (1.9), lesquelles sont couplées les unes aux autres de manière inductive et sont disposées de manière partiellement superposée en vue d'un découplage interactif, un point (1.3) d'extinction optimale de l'interaction pouvant être atteint,
ainsi que des moyens électroniques de senseur pour alimenter en courant des bobines d'émission et pour le traitement d'un signal de réception (1.11) de la bobine de réception,
**caractérisé en ce que**
- les bobines d'émission (2.1, 2.2) recouvrent au moins partiellement la ou les bobine(s) de réception ;
- les bobines d'émission (2.1, 2.2) exercent lors d'une même alimentation en courant une action sur la ou les bobine(s) de réception (1.9), par laquelle l'extinction optimale est obtenue,
- **en ce que** lors de l'alimentation en courant de la première bobine d'émission (2.1), le point d'extinction optimale se déplace dans une première direction, tandis que lors de l'alimentation en courant d'une autre bobine d'émission (2.2), le point d'extinction optimale se déplace dans une autre direction, et
- **en ce qu'**il est prévu un circuit de réglage pour le réglage des courants des parties des bobines d'émission, lequel conduit à un déplacement du point local d'extinction optimale qui produit une extinction du signal de réception (1.11).

2. Senseur selon la revendication 1, **caractérisé en ce que** les bobines d'émission sont formées de plusieurs parties de bobine d'émission qui présentent ensemble à peu près la forme d'une bobine d'émission correspondant de préférence à la ou les bobines de réception (1.9).

3. Senseur selon l'une des revendications 1 et 2, **caractérisé en ce que** deux bobines d'émission (2.1, 2.2) recouvrent de préférence la bobine de réception (1.9) avec des surfaces différentes.

4. Senseur selon l'une des revendications précédentes, **caractérisé en ce que** plusieurs bobines de réception (8.1, 8.2) et des bobines d'émission (2.1, 8.3) sont prévues, au moins une bobine d'émission (2.1, 8.3) et au moins une bobine de réception (8.2, 8.1) étant disposées respectivement dans un premier plan (10.2) et dans au moins un autre plan (10.3), les bobines disposées dans le premier plan étant tournées d'un angle au centre autour de leur axe central commun supposé (M1, M2) par rapport aux bobines disposées dans au moins un autre plan, en vue d'une extinction de l'interaction des bobines, les axes centraux (M1, M2) étant décalés ou déplacés l'un par rapport à l'autre.

5. Senseur selon la revendication 4, **caractérisé en ce que** le pourtour des bobines d'émission (2.1, 8.3) est à peu près congruent avec le pourtour des bobines de réception (8.1, 8.2).

6. Détecteur selon la revendication 4 ou 5, **caractérisé en ce que** les bobines d'émission (2.1, 8.3) et/ou les bobines de réception (8.1, 8.2) sont formées de plusieurs parties de bobine ou de deux moitiés de bobine essentiellement de même taille.

7. Senseur selon l'une des revendications précédentes, **caractérisé en ce qu'**un axe (3.2), de préférence un axe de symétrie de l'agencement de bobines d'émission, lequel comprend les bobines d'émission (2.1, 2.2), est incliné d'un angle (W) par rapport à un axe (3.1), de préférence un axe de symétrie, de la bobine de réception (1.9).

8. Senseur selon l'une des revendications précédentes, **caractérisé en ce que** les point centraux d'agencement des bobines d'émission (2.1, 2.2) et de la bobine de réception (1.9) sont espacés l'un de l'autre d'une distance (A) qui détermine, lorsque les courants dans les bobines d'émission sont égaux, à peu près la zone dans laquelle le point local (1.3) se trouve.

9. Senseur selon l'une des revendications précédentes, **caractérisé en ce qu'**il est prévu un comparateur (4.7) pour la comparaison des signaux de tension associés aux bobines d'émission (2.1, 2.2) et **en ce qu'**il est prévu au moins une source de courant réglée (4.9, 4.10), dans laquelle la valeur de réglage règle l'intensité du courant de préférence de manière continue, en vue du réglage de l'intensité du courant fourni aux bobines d'émission, de telle manière que les amplitudes des signaux de tension aux entrées du comparateur (4.7) soient essentiellement égales ou qu'il n'y ait aucune différence provenant de deux tronçons de cadençage d'un cycle de cadençage, entre les signaux de tension aux entrées du comparateur (4.7).

10. Procédé de localisation d'objets métalliques à l'aide d'un senseur, en particulier un détecteur de métaux fonctionnant sur le mode d'induction de pulsations, comportant plusieurs bobines d'émission (2.1, 2.2) et au moins une bobine de réception (1.9), lesquelles sont couplées les unes aux autres de manière inductive et sont disposées de manière partiellement superposée en vue d'un découplage d'interaction, un point (1.3) d'extinction optimale pouvant être atteint, auquel une extinction du signal de réception (1.11) est obtenue, dans lequel les bobines d'émission sont alimentées en courant par des moyens électroniques de senseur et un signal de réception (1.11) de la bobine de réception est traité,
**caractérisé en ce que**
- plusieurs bobines d'émission (2.1, 2.2) sont alimentées en courant par les moyens électroniques de senseur et recouvrent au moins partiellement la bobine de réception,
- **en ce que** les bobines d'émission exercent, lors d'une même alimentation en courant, une action sur la bobine de réception (1.9) qui produit un point local (1.3) d'extinction optimale ;
- **en ce que** lors de l'alimentation en courant d'une bobine d'émission (2.1), le point d'extinction optimale se déplace dans une première direction, tandis que lors de l'alimentation en courant d'une autre bobine d'émission (2.2), le point d'extinction optimale se déplace dans une autre direction, et
- **en ce que** les courants des bobines d'émission sont réglés de telle sorte qu'il se produise un déplacement du point local d'extinction optimale, lequel crée une extinction du signal de réception (1.11).

11. Procédé selon la revendication 10, **caractérisé en ce que** plusieurs parties de bobine d'émission sont utilisées comme bobines d'émission et présentent ensemble à peu près la forme d'une bobine d'émission correspondant de préférence à la bobine de réception (1.9) et/ou on utilise comme bobines d'émission deux moitiés de bobine d'émission essentiellement de même taille.

12. Procédé selon l'une des revendications 10 et 11, **caractérisé en ce qu'**un axe (3.2), de préférence un axe de symétrie, de l'agencement de bobines d'émission, lequel comprend les bobines d'émission (2.1, 2.2), est disposé de manière inclinée d'un angle (W) par rapport à un axe (3.1), de préférence un axe de symétrie, de la bobine de réception (1.9).

13. Procédé selon l'une des revendications 10 à 12, **caractérisé en ce que** la bobine de réception est recouverte par deux bobines d'émission (2.1, 2.2) de préférence avec des surfaces différentes.

14. Procédé selon l'une des revendications 10 à 13, caractérisé en qu'il est prévu, pour la fabrication du senseur, plusieurs bobines de réception (8.1, 8.2) et plusieurs bobines d'émission (2.1, 8.3), parmi lesquelles au moins une bobine d'émission (2.1 ; 8.3) et au moins une bobine de réception (8.2, 8.1) sont disposées respectivement dans un premier plan (10.2) et dans au moins un autre plan (10.3), les bobines disposées dans le premier plan étant tournées d'un angle au centre autour de leur axe central commun supposé (M1, M2), par rapport aux bobines disposées dans au moins un autre plan, jusqu'à ce que l'interaction des bobines s'éteigne, les axes centraux (M1, M2) étant alors déplacés l'un de l'autre d'une distance (B).

15. Procédé selon l'une des revendications 10 à 14, **caractérisé en ce que** les signaux de tensions associés aux parties de la bobine d'émission (2.1, 2.2) sont comparés de préférence continuellement pour atteindre la valeur de réglage et **en ce que** la valeur de réglage règle à l'aide d'au moins une source de courant réglée (4.9, 4.10) l'intensité du courant fourni aux parties de la bobine d'émission, de telle manière que les amplitudes des signaux de tension soient sensiblement égales aux entrées du comparateur (4.7).

16. Procédé selon l'une des revendications 10 à 15, **caractérisé en ce que** le changement de la valeur de réglage, qui conduit à un déplacement local du point (1.3) de l'extinction optimale, par exemple lors du rapprochement d'un métal, est utilisé comme valeur de mesure, par exemple pour un rapprochement d'un métal.

17. Procédé selon l'une des revendications 10 à 16, **caractérisé en ce que** les bobines d'émission (2.1, 2.2) sont commandées avec la cadence d'un générateur de cadençage (4.8) et **en ce que** les signaux de réception de la bobine de réception (1.9) sont échantillonnés avec la cadence, les durées d'échantillonnage pouvant être librement choisies, réglées par petits pas, de préférence de quelques milliers de nanosecondes, et se situant à n'importe quel endroit prédéterminé ou spécifiable du tronçon de cadençage, afin d'obtenir des informations déterminées à partir du signal de réception.
